**Europäisches Patentamt**

**European Patent Office**

**Office européen des brevets**

(19)

(11) Veröffentlichungsnummer : **0 501 908 A1**

## (12) EUROPÄISCHE PATENTANMELDUNG

(21) Anmeldenummer : **92810023.9**

(22) Anmeldetag : **15.01.92**

(51) Int. Cl.⁵ : **F16H 21/50, B23D 57/00**

(30) Priorität : **02.02.91 CH 306/91**

(43) Veröffentlichungstag der Anmeldung :
**02.09.92 Patentblatt 92/36**

(84) Benannte Vertragsstaaten :
**AT CH DE FR GB IT LI**

(71) Anmelder : **ZÜND SYSTEMTECHNIK AG**
**Tiefenackerstrasse 61**
**CH-9450 Altstätten (CH)**

(72) Erfinder : **Zeller, Hans**
**Staatsstrasse 100**
**CH-9445 Rebstein (CH)**

(74) Vertreter : **Gachnang, Hans Rudolf**
**Badstrasse 5 Postfach 323**
**CH-8501 Frauenfeld (CH)**

(54) **Hubantriebseinheit für ein Werkzeug.**

(57)   Die Hubantriebseinheit (1) für ein Werkzeug (3) weist einen Kurbelantrieb (13) auf, dessen Drehachse (A) parallel zu oder in der Wirkungsachse (B) des Werkzeuges liegt. Die Kurbelstange (29) ist durch ein Kreuzgelenk (27) mit der Werkzeugaufnahmevorrichtung (23) verbunden. Die Verbindung mit dem Kurbelantrieb (13) besteht aus einem Kugelkopf (31) an der Kurbelstange (29), welcher in einer Ausnehmung (21) in einem scheibenförmigen Kurbelabschnitt (19) gelagert ist. Der Kurbelantrieb (13) ist vorzugsweise direkt auf der Abtriebswelle (47) des Antriebsmotors (5) befestigt.

Fig. 1

EP 0 501 908 A1

Gegenstand der Erfindung ist ein Hubantriebseinheit für ein Werkzeug gemäss Oberbegriff des Patentanspruches 1.

Zum Antrieb von Werkzeugen wie Messer, feilen, Stichel, usw. z.B. auf einem Werkzeugplotter werden Kurbeltriebe verwendet, die mit Pressluft oder einer Kurbelvorrichtung, wie sie in einem Ottomotor vorliegt, verwendet. Die bekannte Kurbelantriebsvorrichtung hat den Nachteil, dass bei beengten Platzverhältnissen, bei denen der Durchmesser der gesamten Antrieb- und Werkzeugeinheit möglichst gering gehalten werden muss, infolge des für den Antrieb der Kurbelwelle notwendigen Winkelgetriebes für viele Anwendungsfälle zu gross ausfällt.

Hier will die Erfindung Abhilfe schaffen.

Die Erfindung, wie sie in den Ansprüchen gekennzeichnet ist, löst die Aufgabe, einen Hubantrieb für ein Werkzeug zu schaffen, dessen Antriebsmotor innerhalb der radialen Abmessungen des Gehäuses für die Werkzeugaufnahme untergebracht werden kann.

Die in einer senkrecht zur Hubebene liegende Umlaufbahn der Kurbel ermöglicht es, letztere direkt auf der Abtriebswelle eines Antriebsmotors aufzusetzen bzw. mit dieser zu verbinden. Der direkte Antrieb ohne Zwischenschaltung eines Getriebes erlaubt die Verwendung eines leistungsschwächeren und damit kleiner dimensionierten Antriebsmotor. Im weiteren lassen sich die Schwingungen und Geräusche durch den Kurbelantrieb infolge der kleinen bewegten Hubmasse auf ein Minimum reduzieren. Die im wesentlichen koaxiale Lage aller Antriebsteile erlaubt die Herstellung von Hubantriebseinheiten mit minimalem Durchmesser.

Anhand illustrierter Ausführungsbeispiele wird die Erfindung näher erläutert. Es zeigen:

Figur 1 einen Längsschnitt durch den Hubantrieb längs Linie I-I in Figur 3,

Figur 2 einen Längsschnitt durch den Hubantrieb längs Linie II-II in Figur 4,

Figur 3 einen Querschnitt längs Linie III-III in Figur 1,

Figur 4 einen Querschnitt längs Linie V-V in Figur 2,

Figur 5 einen Längsschnitt durch den Hubantrieb in einer weiteren Ausgestaltung der Erfindung,

Figur 6 einen Längsschnitt durch den Hubantrieb gemäss Figur 5 und

Figur 7 einen Längsschnitt durch den Hubantrieb in einer weiteren Ausgestaltung der Erfindung.

Die in den Figuren dargestellte Hubantriebseinheit 1 für ein Werkzeug 3, z.B. ein Messer, besteht aus einem Antriebsmotor 5, einer Hubantriebsvorrichtung 7 in einem Hubantriebsgehäuse 9 und einem Werkzeugführungsgehäuse 11. Der Antriebsmotor 5, das Hubantriebsgehäuse 9 und das Werkzeugführungsgehäuse 11 sind miteinander fest verbunden. Der Antriebsmotor 5 und die funktionsweise und Ausgestaltung des Werkzeugführungsgehäuses 11 sind nicht Gegenstand der Erfindung und werden daher nur so weit wie für das Verständnis der Erfindung nötig beschrieben. für die Erzeugung einer Hubbewegung des Werkzeuges 3 ist im Hubantriebsgehäuse 9 ein Kurbelantrieb 13 eingesetzt, welcher einen zylindrischen Abschnitt 15 aufweist, der in einem Wälzlager 17 drehbar gelagert ist. An den zylindrischen Abschnitt 15 schliesst der Kurbelabschnitt 19 an. Im dargestellten Beispiel ist letzterer zwecks Erreichung einer einwandfreien Massenausgleichsmöglichkeit scheibenförmig ausgebildet. Im Kurbelabschnitt 19 ist stirnseitig eine halbkugelförmige Ausnehmung 21 eingelassen. Die Ausnehmung 21 liegt radial ausserhalb der Drehachse A des Kurbelantriebes 13.

Im Werkzeugführungsgsgehäuse 11 ist eine axial verschiebbar gelagerte Werkzeugaufnahmevorrichtung 23 angeordnet, an deren unterem Ende das Werkzeug 3 mittels eines Befestigungselementes 25, z.B. einer Klemmschraube befestigt ist. Am oberen Ende der Werkzeugaufnahmevorrichtung ist das mit einem Kreuzgelenk 27 versehene Ende einer Kurbelstange 29 befestigt. Das dem Kreuzgelenk 27 gegenüberliegende Ende der Kurbelstange 29 ist als Kugelkopf 31 ausgebildet und liegt, gehalten durch eine Führungs- und Halteplatte 33, in der Ausnehmung 21. Das Kreuzgelenk 27 besteht aus einer an der Kurbelstange 29 befestigten Gabel 35, in deren Schenkelenden eine erste Drehachse 37 angeordnet ist. Die Drehachse 37 durchdringt ein quader- oder kreuzförmiges Uebertragungselement 39, welches eine weitere senkrecht zur ersten Drehachse 37 liegende Bohrung 41 für eine zweite Drehachse 43 aufweist. Die zweite Drehachse 43 wird gebildet durch einen Bolzen 49, der an der Werkzeugaufnahmevorrichtung 23 gehalten ist. Anstelle eines Kreuzgelenkes der oben beschriebenen Gattung kann selbstverständlich auch ein anderes Verbindungsmittel treten, welches die Uebertragung der Bewegung der Kurbelstange 29 auf die Werkzeugaufnahmevorrichtung 23 ermöglicht. Als Beispiel sei hier nur ein zweiter Kugelkopf analog zu demjenigen am oberen Ende der Kurbelstange 29 erwähnt

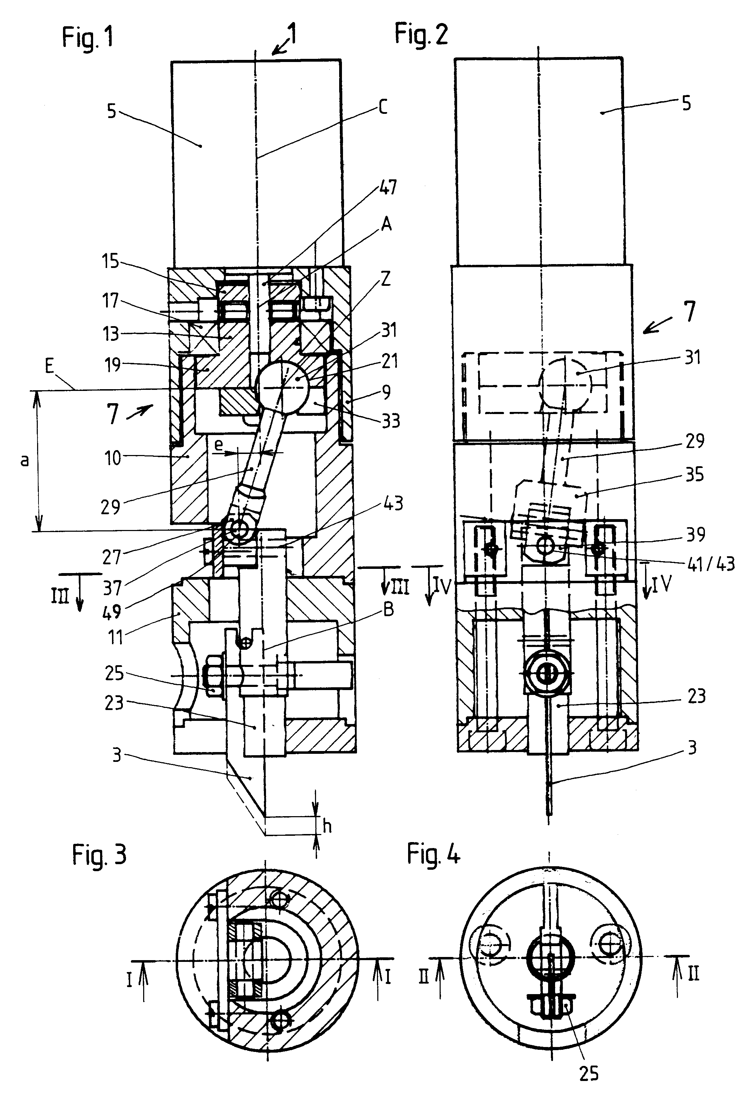

Die Drehachse C des Antriebsmotors 5, die Drehachse A des Kurbelantriebes 13 sowie die Hubachse B, im vorliegenden fall liegt diese in der Schneidkante des Werkzeuges 3, fallen in der ersten Ausführung gemäss den Figuren 1 bis 4 zusammen.

Im folgenden wird die funktionsweise der Hubantriebseinheit erläutert. Durch den Antriebsmotor 5, dies kann ein Elektro- oder Druckluftmotor sein, wird über dessen Abtriebswelle 47 der Kurbelantrieb 13 in Rotation versetzt. Die Rotationsbewegung des Kurbelantriebes 13, welcher den Kugelkopf 31 der Kurbelstange 29 trägt, versetzt das obere Ende der Kurbelstange 29 in eine kreisförmige Bewegung in einer Normalebene zur Hubachse B des Werkzeuges 3. Durch die Tatsache, dass die erste Drehachse 37 des Kreuzgelenkes 27 am unteren Ende der Kurbelstange 29 um den Betrag e exzentrisch zur Drehachse A des Kurbelantriebes 13 liegt, verändert sich während jeder Umdrehung des Kurbelabschnittes 19 der Abstand a zwischen der Drehebene E, in welcher das Zentrum Z des Kugelkopfes 31 rotiert, zur ersten Drehachse 37 zwischen einem maximalen Wert und einem minimalen Wert. Die Differenz zwischen diesem maximalen und minimalen Wert ergibt die Hubhöhe h des Werkzeuges 3.

Durch Verändern der Exzentrizität e kann die Hubhöle h vergrössert oder verkleinert werden.

Die Exzentrizität e kann dadurch verändert werden, dass entweder der den Kugelkopf 31 aufnehmende Kurbelabschnitt 19 durch einen anderen ausgetauscht wird, dessen Ausnehmung 21 radial weiter aussen oder weiter innen angebracht ist, oder dass am Kurbelabschnitt 19 die Ausnehmung 21 in einer radial zur Achse A verschiebbaren und feststellbaren Vorrichtung gehalten wird (keine Abbildung).

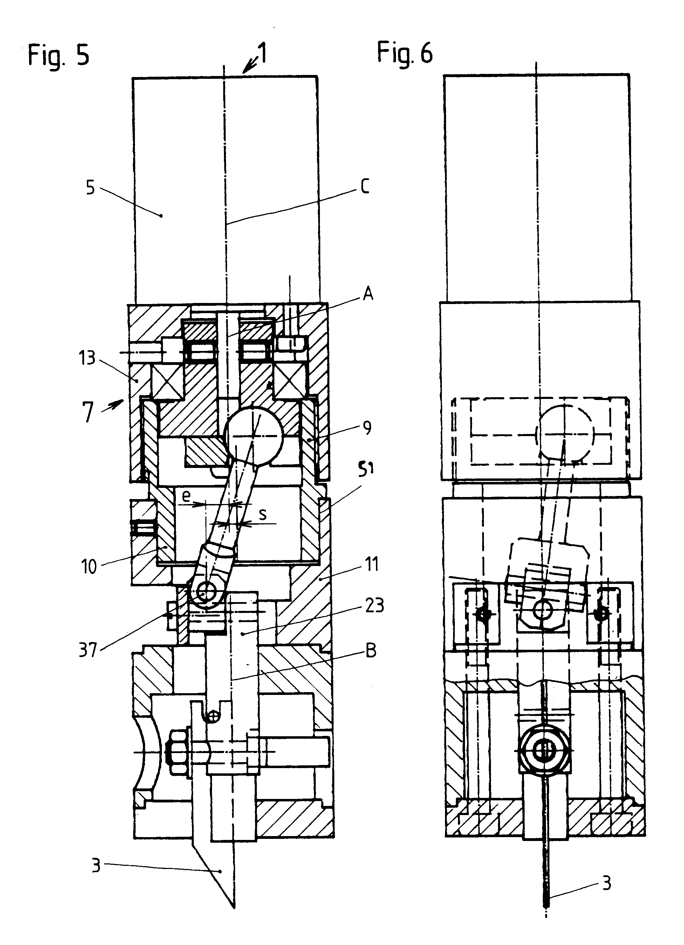

Eine weitere Möglichkeit zur Veränderung des Hubes h wird in der Ausführungsform der Erfindung gemäss den Figuren 5 und 6 gezeigt. für alle funktionsgleichen Elemente werden dieselben Bezugszeichen verwendet wie in den Figuren 1 bis 4.

Sämtliche Elemente des Antriebsmotors 5 und der Hubantriebsvorrichtung 7 sowie der Bewegungsübertragungselemente zwischen der Hubantriebsvorrichtung 7 und der Werkzeugaufnahmevorrichtung 23 entsprechen der Ausführung in den Figuren 1 bis 4.

Die Verbindung zwischen dem Hubantriebsgehäuse 9 und dem Werkzeugführungsgehäuse 11 ist derart ausgestaltet, dass die Exzentrizität e durch gegenseitiges Verdrehen der beiden Gehäuse 9 und 11 veränderbar ist. Dazu ist am Werkzeugführungsgehäuse 11 eine exzentrisch zur Achse B, und damit auch zu den Achsen A und C liegende zylindrische Führungsfläche 51 vorgesehen, welche das untere Ende 10 des Hubantriebsgehäuses 9 aufnimmt. Auch das untere Ende 10 kann, wie Figur 5 zeigt, bezüglich der Achse A konzentrisch ausgestaltet sein, und zwar um den Betrag s.

Die Veränderung des Hubes h wird wie folgt vorgenommen: Durch Drehen des Hubantriebgehäuses 9 bezüglich des Werkzeugführunsgehäuses 11 wird die Drehachse A des Kurbelantriebes 13 relativ zur ersten Drehachse 37 am oberen Ende der Werkzeugaufnahmevorrichtung 23 verändert. Dadurch ergibt sich, wie bereits oben erläutert, ein kleinerer oder ein grösserer Abstand zwischen der Ebene E und der ersten Drehachse 37.

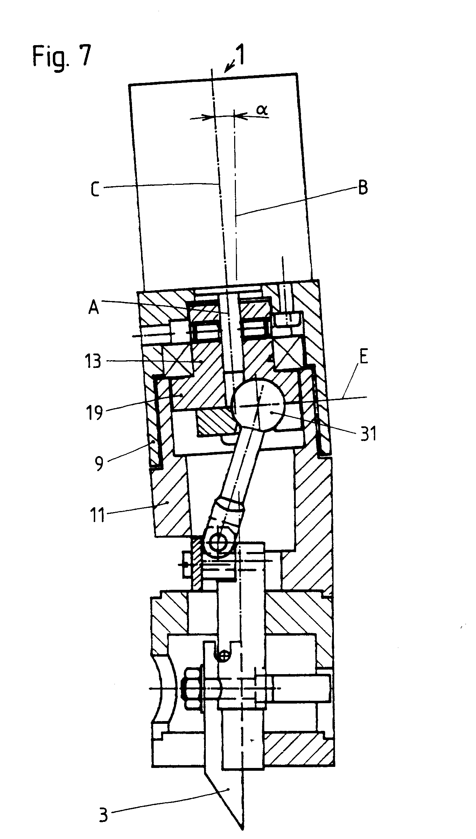

In der Ausgestaltung der Erfindung gemäss Figur 7 ist die Drehachse A des Kurbelantriebes 13 bezüglich der Hubachse B des Werkzeuges 3 schräg gestellt. Die beiden Achsen A und B liegen in einem Winkel alpha zueinander.

Durch die Schrägstellung der Rotationsebene C ergibt sich eine Hubvergrösserung zwischen den Extremstellungen des Kugelkopfes 31, wie sie in Figur 7 dargestellt ist und einer Stellung nach einer 180°-Drehung des Kurbelabschnittes 19.

In Figur 7 sind das Werkzeugführungsgehäuse 11 und das Hubantriebsgehäuse 9 konzentrisch miteinander verbunden. Wird die Verbindung der beiden Gehäuse 9 und 11 hingegen in der in Figur 5 dargestellten exzentrischen Weise ausgeführt, so kann durch Verdrehen des Hubantriebsgehäuses 9 bezüglich des Werkzeugführungsgehäuses 11 ebenfalls eine Veränderung des Werkzeughubes h erreicht werden.

Die gegenseitige Verbindung der einzelnen Gehäuseteile 9,11,13 erfolgt in bekannter Weise und ist nicht Gegenstand dieser Erfindung.


## Patentansprüche

1. Hubantriebseinheit für ein Werkzeug mit einer Kurbelstange und einem die Kurbelstange antreibenden Kurbelantrieb, dadurch gekennzeichnet, dass die Drehachse (A) des Kurbelantriebes (13) in einem Winkel (alpha) von weniger als 30° zur Hubachse (B) des Werkzeuges (3) liegt.

2. Hubantriebseinheit nach Anspruch 1, dadurch gekennzeichnet, dass die Drehachse (A) des Kurbelantriebes (13) und die Hubachse (B) zusammenfallend angeordnet sind (Winkel alpha = 0) und dass das abtriebseitige Ende der Kurbelstange (29) radial ausserhalb der Drehachse (A) und der Hubachse (B) mit dem Werkzeug (3) verbunden ist.

3. Hubantriebseinheit nach Anspruch 2, dadurch gekennzeichnet, dass der Kurbelantrieb (13) mit der Drehachse (A) bezüglich der Hubachse (B) des Werkzeuges (3) radial verschieb- und innerhalb eines Bereiches (s) einstellbar ist.

4. Hubantriebseinheit nach Anspruch 3, dadurch gekennzeichnet, dass das Gehäuse (9) mit dem Kurbelantrieb (13) um einen Betrag (e) exzentrisch auf dem Gehäuse (11) der Werkzeugaufnahmevorrichtung (23) fest oder drehbar aufgesetzt ist.

5. Hubantriebseinheit nach einem der Ansprüche 1 bis 4, dadurch gekennzeichnet, dass der Kurbelantrieb (13) als Scheibe ausgebildet und der antriebseitige Kopf (31) der Kurbelstange (29) aussermittig gelenkig auf dem Kurbelabschnitt (19) gelagert ist.

6. Hubantriebseinheit nach Anspruch 5, dadurch gekennzeichnet, dass der Kopf (31) kugelförmig ausgebildet ist und die Kurbelstange (29) abtriebseitig durch ein Kreuzgelenk (27) mit dem Werkzeug (3) oder einer das Werkzeug tragenden Werkzeugaufnahmevorrichtung (23) verbunden ist.

Fig. 1

Fig. 2

Fig. 3

Fig. 4

Fig. 5

Fig. 6

Fig. 7

**Europäisches Patentamt**

# EUROPÄISCHER RECHERCHENBERICHT

Nummer der Anmeldung

EP 92 81 0023

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|-----------|------------------------------------------------------------------------------------|-------------------|-------------------------------------------|
| X | US-A-1 901 981 (OUSBÄCK) <br> * Abbildung 4 * | 1 | F16H21/50 <br> B23D57/00 |
| Y | | 2 | |
| A | | 6 | |
| | --- | | |
| Y | GB-A-2 044 879 (FORD) <br> * Abbildung 1 * | 2 | |
| A | | 1,6 | |
| | --- | | |
| A | WO-A-8 900 901 (MANNESMANN) <br> * Zusammenfassung; Abbildung 1 * | 1,6 | |
| | ----- | | |

|  | RECHERCHIERTE SACHGEBIETE (Int. Cl.5 ) |
|--|----------------------------------------|
|  | F16H <br> B23D <br> B25F <br> B27B <br> B26D <br> B26F |

Der vorliegende Recherchenbericht wurde für alle Patentansprüche erstellt

| Recherchenort | Abschlußdatum der Recherche | Prüfer |
|---------------|------------------------------|--------|
| BERLIN | 21 APRIL 1992 | GERTIG I. |